# EUROPÄISCHE PATENTANMELDUNG

(11) **EP 3 913 008 A1**
(43) Veröffentlichungstag der Anmeldung: **24.11.2021**
(21) Anmeldenummer: 20175702.8
(22) Anmeldetag: 20.05.2020
(51) Int. Cl.: C08G 18/10, C08G 18/32, C08G 18/48, C08G 18/72, C08G 18/73, C08G 18/76, C08G 18/78, C08G 18/79

(54) **POLYHARNSTOFFZUSAMMENSETZUNG MIT NIEDRIGEM GEHALT AN MONOMEREN DIISOCYANATEN**

(71) Anmelder: SIKA TECHNOLOGY AG, 6340 Baar (CH)
(72) Erfinder: HOLMES, Jordan, Huddersfield, HD2 2PN (GB); THOMSON, Alison, Preston, lancashire PR54PE (GB); GLOVER, Stephen, Chorley, lancashire PR7 7BH (GB); ROUND, Michelle, Leyland, PR25 3YB (GB); COWARD, Alexander, Sale, M33 3FB (GB); GATRELL, Mark, Chipping Preston, PR3 2QY (GB); BYRNE, Mike, Lytham, FY8 2TF (GB)
(74) Vertreter: Sika Patent Attorneys

(57) **Zusammenfassung**

Die vorliegende Erfindung betrifft eine Polyharnstoff-Zusammensetzung mit einem Gehalt an monomeren Diisocyanaten von höchstens 0.5 Gewichts-% bestehend aus einer ersten Komponente **A** enthaltend ein primäres, aromatisches Diamin **A1** und einer zweiten Komponente **B** enthaltend ein Isocyanatgruppen-haltiges Polyetherurethan-Polymer **B1** mit einem Gehalt an monomeren Diisocyanaten von höchstens 0.5 Gewichts-% und ein aliphatisches Polyisocyanat **B2** mit einem NCO-Gehalt von 8 bis 25 Gewichts-%.

Die erfindungsgemässe Polyharnstoff-Zusammensetzung ist gut verarbeitbar und verfügt über eine lange Offenzeit bei schneller Aushärtung. Dabei entsteht ein elastisches Material von hoher Zugfestigkeit bei hoher Dehnbarkeit und hohem E-modul, guten Haftungseigenschaften und hoher Stabilität gegenüber Hitze und Feuchtigkeit.

## Beschreibung

### Technisches Gebiet

Die Erfindung betrifft Polyharnstoff-Zusammensetzungen und ihre Anwendung als Beschichtungen.

### Stand der Technik

Polyharnstoff-Zusammensetzungen, welche durch Reaktion von Isocyanatgruppen mit Amingruppen vernetzen und dabei zu Elastomeren aushärten, werden insbesondere als Beschichtungen in der Bauindustrie eingesetzt, beispielsweise als Bodenbeschichtung oder als Dachabdichtung. Aufgrund ihrer guten Haftung und Elastizität können sie auf die Substrate einwirkende Kräfte, ausgelöst etwa durch Vibrationen oder Temperaturschwankungen, schonend dämpfen und überbrücken. Solche Polyharnstoff-Zusammensetzungen enthalten als Bindemittel konventionelle Isocyanatgruppen-haltige Polymere, welche durch Umsetzung von Polyolen mit monomeren Diisocyanaten hergestellt werden. Die so erhaltenen Polymere enthalten aufgrund von Kettenverlängerungsreaktionen einen Restgehalt an monomeren Diisocyanaten, typischerweise im Bereich von 1 bis 3 Gewichts-%. Monomere Diisocyanate sind potentiell gesundheitsschädlich. Zubereitungen enthaltend monomere Diisocyanate müssen insbesondere ab einer Konzentration von 0.1 Gewichts-% mit Gefahrensymbolen und Warnhinweisen auf dem Etikett und in den Datenblättern versehen sein und können in einigen Ländern nur unter Auflagen verkauft und eingesetzt werden.
Es gibt verschiedene Ansätze zu Isocyanatgruppen-haltigen Polymeren mit geringem Gehalt an monomeren Diisocyanaten. Der in Bezug auf die Produkteigenschaften attraktivste Weg besteht darin, das monomere Diisocyanat bei der Polymerherstellung im Überschuss einzusetzen und anschliessend den Grossteil des nicht umgesetzten monomeren Diisocyanats mittels eines geeigneten Trennverfahrens, insbesondere mittels Destillation, zu entfernen. Polymere aus diesem Verfahren weisen eine vergleichsweise niedrige Viskosität und einen geringen Restgehalt an monomeren Diisocyanaten auf. Polyharnstoff-Zusammensetzungen mit solchen Polymeren sind sehr gut verarbeitbar, zeigen aber eine langsame Aushärtung, eine verminderte Festigkeit und Schwächen im Haftungsaufbau zu den Substraten.

DE 60032938 beschreibt die Herstellung giessbarer Polyurethanprepolymere, die verringerte oder reduzierte Gehalte oder Mengen an nicht umgesetztem MDI-Monomer enthalten.

DE 102010028269 offenbart bei Raumtemperatur pastöse reaktive 1K- oder 2-Komponenten Klebstoffe auf Basis von Polyurethanprepolymeren mit einem geringen Gehalt an monomeren Isocyanaten, die eine die Viskosität absenkende reaktive Verbindung enthalten.

DE 102007025659 beschreibt NCO-Prepolymere mit niedrigem Gehalt an freiem monomerem Diisocyanat, ihre Herstellung und die Verwendung der einstufig hergestellten NCO-Prepolymere.

### Darstellung der Erfindung

Aufgabe der vorliegenden Erfindung ist es daher, Polyharnstoff-Zusammensetzungen mit niedrigem Gehalt an monomeren Diisocyanaten zur Verfügung zu stellen, welche die Nachteile des Standes der Technik überwinden. Die Aufgabe wird mit der Polyharnstoff-Zusammensetzung gemäss Anspruch 1 gelöst. Sie enthält mindestens ein Isocyanatgruppen-haltiges Polyetherurethan-Polymer mit niedrigem Gehalt an monomeren Diisocyanaten und mindestens ein aliphatisches Polyisocyanat. Die erfindungsgemässe Zusammensetzung hat einen Gehalt an monomeren Diisocyanaten von unter 0.5%; sie ist damit auch ohne besondere Schutzvorkehrungen sicher in der Handhabung und kann in vielen Ländern ohne Gefahrenkennzeichnung verkauft werden.
Überraschenderweise verfügt die erfindungsgemässe Zusammensetzung über eine schnelle Aushärtegeschwindigkeit bei langer Offenzeit/Verarbeitbarkeit und nach der Aushärtung über eine hohe Zugfestigkeit und ein hohes E-modul, was für viele Anwendungen sehr vorteilhaft ist.
Unerwarteterweise zeigt die erfindungsgemässe Polyharnstoff-Zusammensetzung bei verlängerter Offenzeit zusätzlich ein höheres E-modul und eine höhere Bruchdehnung im Vergleich zu entsprechenden Zusammensetzungen mit hohem Gehalt an monomeren. Diese vorteilhaften Eigenschaften konnten aus dem Stand der Technik nicht erwartet werden.

Die erfindungsgemässe Polyharnstoff-Zusammensetzung ist gut verarbeitbar und verfügt über eine lange Offenzeit bei schneller Aushärtung. Dabei entsteht ein elastisches Material von hoher Zugfestigkeit bei hoher Dehnbarkeit und hohem E-modul, guten Haftungseigenschaften und hoher Stabilität gegenüber Hitze und Feuchtigkeit. Weiter lassen sich damit gut applizierbare Zusammensetzung ohne oder mit besonders tiefen Mengen an organischen Lösungsmitteln herstellen.
Die Polyharnstoff-Zusammensetzung ist besonders geeignet für die Verwendung als elastische Beschichtung.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Polyharnstoff-Zusammensetzung mit einem Gehalt an monomeren Diisocyanaten von höchstens 0.5 Gewichts-% umfassend eine erste Komponente **A** enthaltend:
- mindestens ein primäres, aromatisches Diamin **A1** ausgewählt aus der Liste bestehend aus Diethyltoluoldiamin (DETDA), insbesondere 3,5-diethyltoluol-2,4-diamin und 3,5-diethyltoluol-2,6-diamin, 4,4'-Methylenbis-(2,6-diethyl)-anilin (MDEA), 4,4'-Methylenbis-(2,6-diisopropyl)-anilin (MDIPA), 4,4'-Methylenbis-(3-chloro, 2,6-diethyl)-anilin (MCDEA) und Dimethylthiotoluoldiamin (DMTDA), insbesondere 3, 5-dimethylthio-2, 6-toluoldiamin und 3, 5-dimethylthio-2, 4-toluoldiamin;
und eine zweite Komponente **B** enthaltend:
- mindestens ein Isocyanatgruppen-haltiges Polyetherurethan-Polymer **B1** mit einem Gehalt an monomeren Diisocyanaten von höchstens 0.5 Gewichts-% erhalten aus der Umsetzung von einem monomeren Diisocyanat, wobei es sich um 4,4'-Diphenylmethandiisocyanat, gegebenenfalls mit Anteilen von 2,4'- und/oder 2,2'-Diphenylmethandiisocyanat handelt, mit mindestens einem Polyetherpolyol in einem NCO/OH-Verhältnis von mindestens 3/1 und nachfolgender Entfernung eines Grossteils der monomeren Diisocyanate mittels eines geeigneten Trennverfahrens und
- mindestens ein aliphatisches Polyisocyanat **B2** mit einem NCO-Gehalt von 8 bis 25 Gewichts-%.
Das Gewichtsverhältnis **B1/B2** liegt im Bereich von 5 - 50, insbesondere 7.5 - 30, vorzugsweise 8 - 25.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.
Als "Polyetherurethan-Polymer" wird ein Polymer bezeichnet, welches als Repetiereinheiten Ethergruppen aufweist und zusätzlich Urethangruppen enthält.
Mit "Poly" beginnende Substanznamen wie Polyol bezeichnen Substanzen, die formal zwei oder mehr der in ihrem Namen vorkommenden funktionellen Gruppen pro Molekül enthalten.
Als "NCO-Gehalt" wird der Gehalt an Isocyanatgruppen in Gewichts-% bezeichnet. Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase und einem Brechungsindex-Detektor.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.
Als "primäre Hydroxylgruppe" wird eine OH-Gruppe bezeichnet, welche an ein C-Atom mit zwei Wasserstoffen gebunden ist.
Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.
Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.
Als "Offenzeit" wird die Zeitspanne bezeichnet, während welcher die Zusammensetzung nach dem Vermischen der Komponenten ohne Einbussen bei den Endeigenschaften appliziert werden kann.
Die beiden Komponenten **A** und **B** werden in voneinander getrennten Gebinden gelagert und erst kurz vor oder während der Applikation der Polyharnstoff-Zusammensetzung miteinander vermischt. Eine solche Zusammensetzung wird auch als "zweikomponentig" bezeichnet.

Die Polyharnstoff-Zusammensetzung weist einen Gehalt an monomeren Diisocyanaten von höchstens 0.5 Gewichts-%, vorzugsweise von höchstens 0.3 Gewichts-%, von höchstens 0.2 Gewichts-%, besonders bevorzugt von höchstens 0.1 Gewichts-%, am meisten bevorzugt von weniger als 0.1 Gewichts-%, auf.

Die erste Komponente **A** enthält mindestens ein primäres, aromatisches Diamin **A1** ausgewählt aus der Liste bestehend aus Diethyltoluoldiamin (DETDA), insbesondere 3,5-diethyltoluol-2,4-diamin und 3,5-diethyltoluol-2,6-diamin, 4,4'-Methylenbis-(2,6-diethyl)-anilin (MDEA), 4,4'-Methylenbis-(2,6-diisopropyl)-anilin (MDIPA), 4,4'-Methylenbis-(3-chloro, 2,6-diethyl)-anilin (MCDEA) und Dimethylthiotoluoldiamin (DMTDA), insbesondere 3, 5-dimethylthio-2, 6-toluoldiamin und 3, 5-dimethylthio-2, 4-toluoldiamin.

Besonders bevorzugt handelt es ich bei dem primären, aromatischen Diamin **A1** um DMTDA, am meisten bevorzugt um 3, 5-dimethylthio-2, 6-toluoldiamin oder 3, 5-dimethylthio-2, 4-toluoldiamin, insbesondere um eine Mischung dieser Isomeren. Eine solche Mischung ist beispielsweise kommerziell erhältlich als Ethacure® 300 (von Albermale).

Die zweite Komponente **B** enthält mindestens ein Isocyanatgruppen-haltiges Polyetherurethan-Polymer **B1** mit einem Gehalt an monomeren Diisocyanaten von höchstens 0.5 Gewichts-% erhalten aus der Umsetzung von einem monomeren Diisocyanat, wobei es sich um 4,4'-Diphenylmethandiisocyanat, gegebenenfalls mit Anteilen von 2,4'- und/oder 2,2'-Diphenylmethandiisocyanat handelt, mit mindestens einem Polyetherpolyol in einem NCO/OH-Verhältnis von mindestens 3/1 und nachfolgender Entfernung eines Grossteils der monomeren Diisocyanate mittels eines geeigneten Trennverfahrens.

Das vorgehend genannte Isocyanatgruppen-haltige Polyetherurethan-Polymer kann auch als Polyurethan-Prepolymer bezeichnet werden.

Bevorzugt hat das Isocyanatgruppen-haltige Polyetherurethan-Polymer einen Gehalt an monomeren Diisocyanaten von höchstens 0.3 Gewichts-%, 0.2 Gewichts-%, insbesondere höchstens 0.1 Gewichts-%, am meisten bevorzugt von weniger als 0.1 Gewichts-%.

Bevorzugt hat das Isocyanatgruppen-haltige Polyetherurethan-Polymer ein mittleres Molekulargewicht Mₙ im Bereich von 1'000 bis 8'000 g/mol, bevorzugt 1'500 bis 6'000 g/mol, insbesondere 2'000 bis 4'000 g/mol.

Bevorzugt hat das Isocyanatgruppen-haltige Polyetherurethan-Polymer **B1** einen NCO-Gehalt im Bereich von 1 bis 8.4 Gewichts-%, besonders bevorzugt 1.4 bis 5.6 Gewichts-%, insbesondere 2 bis 4.2 Gewichts-%.

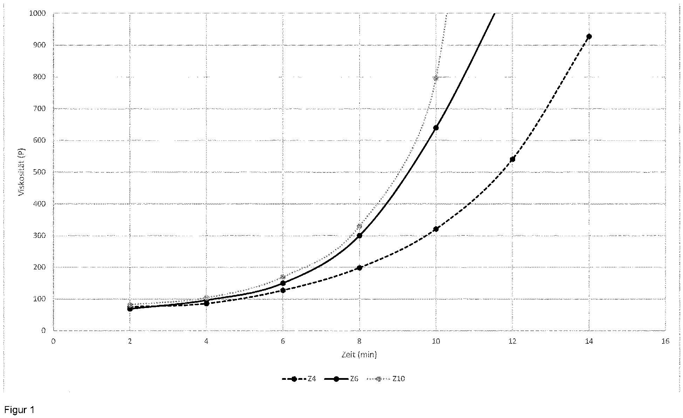

Dies ist dahingehend von Vorteil, dass dadurch eine längere Offenzeit/ Verarbeitbarkeit und bessere mechanische Eigenschaften, insbesondere in Bezug auf das E-modul und Bruchdehnung, erhalten werden. Dies ist beispielsweise in der Figur 1 und in der Tabelle 2 im Vergleich von Z4 mit Z10 ersichtlich.

Bevorzugt weist das Isocyanatgruppen-haltige Polyetherurethan-Polymer als Repetiereinheiten 1,2-Ethylenoxy-, 1,2-Propylenoxy-, 1,3-Propylenoxy-, 1,2-Butylenoxy- oder 1,4-Butylenoxy-Gruppen auf. Bevorzugt sind 1,2-Ethylenoxy- und 1,2-Propylenoxy-Gruppen.
Besonders bevorzugt weist es als Repetiereinheiten mehrheitlich oder ausschliesslich 1,2-Propylenoxy-Gruppen auf.

Das für die Umsetzung verwendete monomere Diisocyanat ist 4,4'-Diphenylmethandiisocyanat (4,4'-MDI), gegebenenfalls mit Anteilen von 2,4'- und/oder 2,2'-Diphenylmethandiisocyanat.

Besonders bevorzugt ist 4,4'-MDI. Dabei ist das 4,4'-MDI von einer Qualität, welche nur geringe Anteile an 2,4'- und/oder 2,2'-Diphenylmethandiisocyanat enthält und bei Raumtemperatur fest ist. Es ermöglicht Polyharnstoff-Zusammensetzung mit besonders hoher Festigkeit bei hoher Dehnbarkeit und Elastizität.

Bevorzugt ist das 4,4'-MDI destilliert und weist eine Reinheit von mindestens 95 %, insbesondere mindestens 97.5 %, auf.
Ein kommerziell erhältliches 4,4'-Diphenylmethandiisocyanat dieser Qualität ist beispielsweise Desmodur® 44 MC (von Covestro) oder Lupranat® MRSS oder ME (von BASF) oder Suprasec® 1400 (von Huntsman).

Das Polyetherpolyol hat bevorzugt ein mittleres Molekulargewicht Mₙ im Bereich von 400 bis 5'000 g/mol, bevorzugt 1'000 bis 3'000 g/mol.

Das Polyetherpolyol hat bevorzugt eine OH-Zahl im Bereich von 20 bis 280 mg KOH/g, bevorzugt im Bereich von 35 bis 120 mg KOH/g, besonders bevorzugt im Bereich von 50 bis 60 mg KOH/g.

Das Polyetherpolyol hat bevorzugt eine mittlere OH-Funktionalität im Bereich von 1.7 bis 3, insbesondere im Bereich von 1.8 bis 2.

Geeignet als Polyetherpolyol sind Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2-oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3-oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen.
Besonders bevorzugt sind Polyoxypropylen-Diole, Polyoxypropylen-Triole, oder Ethylenoxid-terminierte Polyoxypropylen-Diole oder -Triole. Dies sind Polyoxyethylenpolyoxypropylen-Mischpolyole, die insbesondere dadurch erhalten werden, dass Polyoxypropylen-Diole oder -Triole nach Abschluss der Polypropoxylierungsreaktion mit Ethylenoxid weiter alkoxyliert werden und dadurch schliesslich primäre Hydroxylgruppen aufweisen. Insbesondere bevorzugt sind Polyoxypropylen-Diole.

Bevorzugte Polyetherpolyole weisen einen Ungesättigtheitsgrad von weniger als 0.02 mEq/g, insbesondere weniger als 0.01 mEq/g auf.

Besonders bevorzugt ist ein Polyoxyproylen-Diol mit einer OH-Zahl im Bereich von 35 bis 120 mg KOH/g, 40 bis 80 mg KOH/g, insbesondere im Bereich von 50 bis 60 mg KOH/g

Bevorzugt liegt das NCO/OH-Verhältnis bei der Umsetzung zwischen dem monomeren Diisocyanat mit dem Polyetherpolyol im Bereich von 3/1 bis 10/1, besonders bevorzugt im Bereich von 3/1 bis 8/1, insbesondere im Bereich von 4/1 bis 7/1.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.
Nach der Umsetzung wird das im Reaktiongemisch verbleibende monomere Diisocyanat bis auf den beschriebenen Restgehalt mittels eines geeigneten Trennverfahrens entfernt.
Als Trennverfahren bevorzugt ist ein destillatives Verfahren, insbesondere Dünnschichtdestillation oder Kurzwegdestillation, bevorzugt unter Anlegen von Vakuum.
Besonders bevorzugtist ein mehrstufiges Verfahren, bei welchem das monomere Diisocyanat in einem Kurzwegverdampfer bei einer Manteltemperatur im Bereich von 160 bis 200°C und einem Druck von 0.001 bis 0.5 mbar entfernt wird.
Bevorzugt erfolgen die Umsetzung des monomeren Diisocyanats mit dem Polyetherpolyol und das anschliessende Entfernen des Grossteils des im Reaktionsgemisch verbliebenen monomeren Diisocyanats ohne den Einsatz von Lösemitteln bzw. Schleppmitteln.

Bei der Umsetzung reagieren die OH-Gruppen des Polyetherpolyols mit den Isocyanatgruppen des monomeren Diisocyanats. Dabei kommt es auch zu sogenannten Kettenverlängerungsreaktionen, indem OH-Gruppen und/oder Isocyanatgruppen von Umsetzungsprodukten zwischen Polyol und monomerem Diisocyanat reagieren. Je höher das NCO/OH-Verhältnis gewählt wird, desto weniger Kettenverlängerungsreaktionen finden statt, und desto niedriger ist die Polydispersität und somit die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Diisocyanat.

Bevorzugt beträgt der NCO-Gehalt des Polyetherurethan-Polymers mindestens 80%, insbesondere mindestens 85%, des theoretischen NCO-Gehalts, welcher aus der Addition von einem mol monomerem Diisocyanat pro mol OH-Gruppen des Polyetherpolyols berechnet wird. Ein solches Polyetherurethan-Polymer ist besonders niedrigviskos.

Ein besonders bevorzugtes Polyetherurethan-Polymer hat einen NCO-Gehalt im Bereich von 1 bis 8.4 Gewichts-%, besonders bevorzugt 1.4 bis 5.6 Gewichts-%, insbesondere 2 bis 4.2 Gewichts-%, und einen Gehalt an monomeren Diisocyanaten von höchstens 0.3 Gewichts-%, insbesondere höchstens 0.2 Gewichts-%, und ist erhalten aus der Umsetzung von 4,4'-MDI mit einem Polyoxyproylen-Diol mit einer OH-Zahl im Bereich von 35 bis 120 mg KOH/g, 40 bis 80 mg KOH/g, insbesondere im Bereich von 50 bis 60 mg KOH/g.

Die zweite Komponente **B** enthält mindestens ein aliphatisches Polyisocyanat **B2** mit einem NCO-Gehalt von 8 bis 25 Gewichts-%, vorzugsweise von 10 bis 22.5 Gewichts-%, insbesondere von 10 bis 21 Gewichts-%, besonders bevorzugt von 15 bis 21 Gewichts-%.

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Vorzugsweise ist das aliphatische Polyisocyanat **B2** ein Oligomer, Polymer und/oder Derivat abgeleitet von 1,6-Hexamethylendiisocyanat (HDI) oder Isophorondiisocyanat (IPDI), insbesondere HDI.

Vorzugsweise weist das aliphatische Polyisocyanat **B2** eine mittlere NCO-Funktionalität von mindestens 2.1 auf. Insbesondere bevorzugt weisen sie eine mittlere NCO-Funktionalität von 2.1 bis 4.0, vorzugsweise 2.1 bis 3.0, insbesondere 2.1 bis 2.6, auf.
Dies ist insbesondere einer höheren Bruchdehnung zuträglich. Dies ist beispielsweise in der Tabelle 1 im Vergleich von Z3-Z6 mit Z7-Z8 ersichtlich.

Weiter kann es auch vorteilhaft sein, wenn das aliphatische Polyisocyanat **B2** eine mittlere NCO-Funktionalität von 2.2 bis 3.0, insbesondere 2.3 bis 2.8, besonders bevorzugt 2.4 bis 2.6, aufweist.
Dies ist insbesondere einer höheren Zugfestigkeit zuträglich. Dies ist beispielsweise in der Tabelle 1 im Vergleich von Z5-Z6 mit Z3-Z4 und Z7-Z8 ersichtlich.

Weiter kann es vorteilhaft sein, wenn das aliphatische Polyisocyanat **B2** eine mittlere NCO-Funktionalität von 2.2 bis 4.0, insbesondere 2.4 bis 3.8, besonders bevorzugt 2.8 bis 3.6, aufweist.
Dies ist insbesondere einem höheren E-modul zuträglich. Dies ist beispielsweise in der Tabelle 1 im Vergleich von Z7-Z8 mit Z5-Z6 und Z3-Z4 ersichtlich.

Besonders vorteilhaft handelt es sich bei dem aliphatischen Polyisocyanat **B2** um Oligomere, Polymere und/oder Derivate abgeleitet von HDI, insbesondere um Polymere abgeleitet von HDI, insbesondere mit einer mittleren NCO-Funktionalität von 2.1 bis 2.6.

Vorzugsweise weisen sie eine Viskosität bei 23°C von 300 - 2000 mPa·s, bevorzugt 400 - 1500 mPa·s, insbesondere 500 - 1350 mPa·s, gemäss DIN EN ISO 3219/A.3, auf.

Davon insbesondere geeignet sind kommerziell erhältliche Typen, beispielsweise Desmodur® 2863 XP, Desmodur® 2860 XP und Desmodur® N 3900 (alle von Covestro).

Weiter ist es vorteilhaft, wenn das aliphatische Polyisocyanat **B2** einen Gehalt an monomeren Diisocyanaten von höchstens 0.75 Gewichts-%, höchstens 0.5 Gewichts-%, höchstens 0.4 Gewichts-%, insbesondere höchstens 0.3 Gewichts-%, aufweist.

Das Gewichtsverhältnis **B1/B2** liegt im Bereich von 5 - 50, insbesondere 7.5 - 30, vorzugsweise 8 - 25.
Dies ist dahingehend von Vorteil, dass dadurch eine längere Offenzeit/ Verarbeitbarkeit, eine höhere Aushärtungsgeschwindigkeit sowie bessere mechanische Eigenschaften, insbesondere in Bezug auf das E-modul und die Zugfestigkeit, erhalten werden. Dies ist beispielsweise in Tabelle 1 im Vergleich von Z3-Z8 zeigen mit Z1 ersichtlich. Zusammensetzungen basierend auf P1 alleine (Z1) verfügen zwar über eine lange Verarbeitbarkeit, haben jedoch eine tiefe Aushärtungsgeschwindigkeit und verfügen auch über ungenügende mechanische Eigenschaften, insbesondere in Bezug auf das E-modul und die Zugfestigkeit.

Es kann vorteilhaft sein, wenn das Gewichtsverhältnis **B1/B2** im Bereich von 7 - 30, 7 - 15, insbesondere 7 - 12, vorzugsweise 8 - 10, liegt. Dies ist dahingehend von Vorteil, dass dadurch schnellere Aushärtungsgeschwindigkeiten und höhere E-module erhalten werden.

Weiter kann es vorteilhaft sein, wenn das Gewichtsverhältnis **B1/B2** im Bereich von 7 - 30, 10 - 30, insbesondere 15 - 25, vorzugsweise 17 - 22, liegt. Dies ist dahingehend von Vorteil, dass dadurch länger Offenzeiten und höhere Bruchdehnungen erhalten werden.

Es kann weiter vorteilhaft sein, wenn die Summe der NCO-Gruppen, welche nicht von **B1 oder B2** herrühren, ≤ 10 %, ≤ 5 %, insbesondere ≤ 2 %, insbesondere bevorzugt ≤ 1 %, am meisten bevorzugt ≤ 0.5 %, beträgt, bezogen auf die Summe aller NCO -Gruppen der Polyharnstoff-Zusammensetzung.

Die Polyharnstoff-Zusammensetzung kann weitere Bestandteile enthalten.

Die erste Komponente **A** kann weitere als Härter geeignete Verbindungen enthalten, insbesondere weitere Amine, Aminoalkohole, Kettenverlängerer wie 1,4-Butandiol oder Polyole, sowie Amine mit blockierten Aminogruppen wie Aldimine, Ketimine oder Enamine.
Bevorzugt enthält die Komponente **A** nur einen geringen Gehalt an solchen weiteren Härtern. Insbesondere beträgt der Gehalt an gegenüber NCO-Gruppen reaktiven Gruppen, welche nicht von einem primären, aromatischen Diamin **A1** stammen, weniger als 50 mol-%, bevorzugt weniger als 20 mol-%, insbesondere weniger als 10 mol-%, bezogen auf alle gegenüber NCO-Gruppen reaktiven Gruppen in der Komponente **A.**

Die zweite Komponente **B** kann weitere Isocyanatgruppen-haltige Bestandteile enthalten, insbesondere weitere Polymere oder Polyisocyanate. Bevorzugt enthält die Komponente **B** nur einen geringen Gehalt an weiteren Isocyanatgruppen-haltigen Bestandteilen. Insbesondere beträgt der Gehalt NCO-Gruppen, welche nicht von einem Polyetherurethan-Polymer **B1** oder aliphatischen Polyisocyanat **B2** stammen, weniger als 25 %, bevorzugt weniger als 10 %, insbesondere weniger als 5 %, bezogen auf alle NCO-Gruppen in der Komponente **B.**

Es kann weiter vorteilhaft sein, wenn die Summe der NCO-Gruppen, welche nicht von **B1 oder B2** herrühren, ≤ 10 %, ≤ 5 %, insbesondere ≤ 2 %, insbesondere bevorzugt ≤ 1 %, am meisten bevorzugt ≤ 0.5 %, beträgt, bezogen auf die Summe aller NCO -Gruppen der Polyharnstoff-Zusammensetzung.

Bevorzugt enthält die Polyharnstoff-Zusammensetzung zusätzlich mindestens einen weiteren Bestandteil ausgewählt aus der Liste bestehend aus Füllstoffen, anorganischen oder organischen Pigmenten, flammhemmenden Substanzen und Additiven.

Vorzugsweise beträgt der Anteil an Füllstoffen 5 - 30 Gew.-%, insbesondere 10 - 25 Gew.-%, besonders bevorzugt 10 - 20 Gew.-%, bezogen auf das Gesamtgewicht der Polyharnstoff-Zusammensetzung.

Vorzugsweise beträgt der Anteil an anorganischen oder organischen Pigmenten, flammhemmenden Substanzen und Additiven 2 - 10 Gew.-%, insbesondere 3 - 8 Gew.-%, besonders bevorzugt 3 - 5 Gew.-%, bezogen auf das Gesamtgewicht der Polyharnstoff-Zusammensetzung.

Vorzugsweise handelt es sich bei den anorganischen oder organischen Pigmenten um Titandioxid, Chromoxide oder Eisenoxide.

Vorzugsweise handelt es sich um flammhemmende Substanzen ausgewählt aus der Liste bestehend aus Aluminiumhydroxid, Magnesiumhydroxid, organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) und Ammoniumpolyphosphate.

Bei den Additiven handelt es sich insbesondere um Additive ausgewählt aus der Liste bestehend aus Netzmittel, Verlaufmittel, Entschäumer, Entlüfter, Stabilisatoren gegen Oxidation, Wärme, Licht oder UV-Strahlung und Biozide.

Geeignete Füllstoffe sind insbesondere ausgewählt aus der Liste bestehend aus gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.
Bevorzugt sind Calciumcarbonate, welche gegebenenfalls mit Fettsäuren, insbesondere Stearaten, beschichtet sind und calcinierte Kaoline.

Beim Herstellen der erfindungsgemässen Polyharnstoff-Zusammensetzung wird der Gehalt an monomeren Diisocyananten beim Vermischen des Isocyanatgruppen-haltigen Polyetherurethan-Polymers mit weiteren Bestandteilen der Zusammensetzung, insbesondere Füllstoffen, durch Reaktion mit vorhandener Feuchtigkeit gegebenenfalls weiter reduziert.

Bevorzugt enthält die Polyharnstoff-Zusammensetzung
- 3 bis 15 Gewichts-%, 5 bis 12 Gewichts-%, insbesondere 7 bis 10 Gewichts-%, primäres, aromatisches Diamin **A1** ausgewählt aus der Liste bestehend aus Diethyltoluoldiamin, insbesondere 3,5-diethyltoluol-2,4-diamin und 3,5-diethyltoluol-2,6-diamin, 4,4'-Methylenbis-(2,6-diethyl)-anilin (MDEA), 4,4'-Methylenbis-(2,6-diisopropyl)-anilin (MDIPA), 4,4'-Methylenbis-(3-chloro, 2,6-diethyl)-anilin (MCDEA) und Dimethylthiotoluoldiamin (DMTDA), insbesondere 3, 5-dimethylthio-2,6-toluoldiamin und 3,5-dimethylthio-2,4-toluoldiamin,
- 55 bis 90 Gewichts-%, 60 bis 90 Gewichts-%, 70 bis 85 Gewichts-%, insbesondere 75 bis 85 Gewichts-% Isocyanatgruppen-haltiges Polyetherurethan-Polymer **B1** mit einem Gehalt an monomeren Diisocyanaten von höchstens 0.5 Gewichts-%,
- 2 bis 15 Gewichts-%, 3 bis 10 Gewichts-%, insbesondere 4 bis 8 Gewichts-%, aliphatisches Polyisocyanat **B2** mit einem NCO-Gehalt von 8 bis 25 Gewichts-%,
- 5 - 30 Gew.-%, insbesondere 10 - 25 Gew.-%, besonders bevorzugt 10 - 20 Gew.-%, Füllstoffe,
- 2 - 10 Gew.-%, insbesondere 3 - 8 Gew.-%, besonders bevorzugt 3 - 5 Gew.-%, von anorganischen oder organischen Pigmenten, flammhemmenden Substanzen und Additiven.

Vorzugsweise besteht die Polyharnstoff-Zusammensetzung zu mehr als 80 Gew.-%, mehr als 90 Gew.-%, mehr als 95 Gew.-%, mehr als 98 Gew.-%, insbesondere mehr als mehr als 99 Gew.-%, aus den in der vorgenannten Polyharnstoff-Zusammensetzung aufgeführten Bestandteilen.

Um solche Produkte gut applizierbar herzustellen könnte beispielsweise ein beträchtlicher Anteil an flüchtigen organischen Lösemitteln zugegeben werden, um die Viskosität zu senken und somit die gute Applizierbarkeit sicherzustellen. Dies ist jedoch aufgrund des Umwelt- und Gesundheitsschutzes nachteilig, da die Zusammensetzungen dadurch hohe VOC-Emissionen aufweisen.

Vorzugsweise enthält die Polyharnstoff-Zusammensetzung weniger als 5 Gew.-%, weniger als 2 Gew.-%, weniger als 1 Gew.-%, weniger als 0.5 Gew.-%, insbesondere weniger als 0.1 Gew-% Lösungsmittel, bezogen auf das Gesamtgewicht der Polyharnstoff-Zusammensetzung.
Solche Lösemittel sind insbesondere Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), sowie Toluol, Xylol, Heptan, Octan, Naphtha, White Spirit, Petrolether oder Benzin, weiterhin Methylenchlorid, Propylencarbonat, Butyrolacton, N-Methylpyrrolidon oder N-Ethylpyrrolidon.
Dies ist aufgrund des Umwelt- und Gesundheitsschutzes vorteilhaft, da die Zusammensetzungen dadurch geringe VOC-Emissionen aufweisen. Es wurde überraschenderweise gefunden, dass die vorliegende Erfindung ohne die vorgehend beschriebenen Lösungsmittel eine tiefe Viskosität erreicht.

In der Polyharnstoff-Zusammensetzung liegt das Verhältnis der Isocyanatgruppen gegenüber den mit Isocyanatgruppen reaktiven Gruppen, insbesondere Aminogruppen, liegt vorzugsweise im Bereich von 1 bis 1.2, bevorzugt im Bereich von 1 bis 1.1.

Vorzugsweise weist die Zusammensetzung 120 Sekunden nach dem Mischen der beiden Komponenten, insbesondere für bei 100 Umdrehungen/min, gemessen mit einem Brookfield HBDV-II+ Viskosimeter unter Verwendung der Spindel 7 bei 23°C und 50% relativer Luftfeuchtigkeit, eine Viskosität von 1'000 - 20'000 cPs, vorzugsweise 2'000 - 15'000 cPs, insbesondere 3'000 - 12'000 cPs, auf.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Flüssigkeit entsteht. Jede Komponente wird in einem separaten feuchtigkeitsdichten Gebinde gelagert. Ein geeignetes Gebinde ist insbesondere ein Fass, ein Container, ein Hobbock, ein Eimer, eine Büchse, ein Beutel, ein Kanister oder eine Flasche.
Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. Komponente typischerweise im Bereich von etwa 1:1 bis 1:20, insbesondere 1:2 bis 1:10.

Das Vermischen der beiden Komponenten erfolgt mittels eines geeigneten Rührwerkes, beispielsweise eines Doppelwellenmischers, wobei die einzelnen Komponenten geeigneter Weise im richtigen Mischungsverhältnis vorkonfektioniert sind. Ebenfalls möglich ist eine kontinuierliche maschinelle Verarbeitung mittels einer Zweikomponenten-Dosieranlage mit statischer oder dynamischer Vermischung der Komponenten. Beim Mischen ist darauf zu achten, dass die zwei Komponenten möglichst homogen vermischt werden. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.
Mit dem Vermischen der beiden Komponenten beginnt die Aushärtung durch chemische Reaktion. Dabei reagieren vorhandene NCO-reaktive Gruppen, insbesondere Aminogruppen, mit vorhandenen Isocyanatgruppen. Als Resultat dieser Reaktionen härtet die Zusammensetzung zu einem festen Material aus. Dieser Vorgang wird auch als Vernetzung bezeichnet.

Weiterhin betrifft die Erfindung eine ausgehärtete Zusammensetzung, erhalten aus einer Zusammensetzung, wie sie vorhergehend beschrieben worden ist, nach dem Vermischen der beiden Komponenten und deren Aushärtung.

Bei der Applikation kann die frisch vermischte, noch flüssige Zusammensetzung als Beschichtung auf eine Fläche appliziert werden. Vorzugsweise wird die Zusammensetzung appliziert, indem sie auf ein Substrat gegossen und anschliessend flächig bis zur erwünschten Schichtdicke verteilt wird, beispielsweise mittels einer Rolle, einem Schieber, einer Zahntraufel, einer Spachtel, einer Bürste oder einem Pinsel.

Ein weiterer Gegenstand der Erfindung ist ein Verfahren zum Beschichten oder Abdichten, umfassend die Schritte
(i) Vermischen der Komponenten der Polyharnstoff-Zusammensetzung,
(ii) Applizieren der vermischten Polyharnstoff-Zusammensetzung auf mindestens ein Substrat,
(iii) Aushärten der Zusammensetzung.

Die Polyharnstoff-Zusammensetzung wird bevorzugt bei Umgebungstemperatur vermischt und appliziert, insbesondere im Bereich von etwa -10 bis 50°C, bevorzugt im Bereich von -5 bis 45°C, insbesondere 0 bis 40°C.
Die Aushärtung der Polyharnstoff-Zusammensetzung erfolgt bevorzugt ebenfalls bei Umgebungstemperatur.

Die Polyharnstoff-Zusammensetzung verfügt über eine lange Verarbeitungszeit (Offenzeit) und eine schnelle Aushärtung.

Bevorzugt weist die Polyharnstoff-Zusammensetzung nach der Aushärtung eine Zugfestigkeit von mindestens 5 MPa, mindestens 8 MPa, insbesondere mindestens 10 MPa, auf, bestimmt wie in den Beispielen beschrieben.

Bevorzugt weist die Polyharnstoff-Zusammensetzung nach der Aushärtung weiterhin eine Bruchdehnung von mindestens 300 %, mindestens 500 %, insbesondere mindestens 700 %, auf, bestimmt wie in den Beispielen beschrieben.

Bevorzugt weist die Polyharnstoff-Zusammensetzung nach der Aushärtung weiterhin ein E-modul von mindestens 8 MPa, insbesondere im Bereich von 9 bis 40 MPa, bevorzugt 10 bis 20 MPa, auf, bestimmt wie in den Beispielen beschrieben. Bevorzugt wird die Polyharnstoff-Zusammensetzung verwendet als elastische Beschichtung.

Als Beschichtung ist die Polyharnstoff-Zusammensetzung insbesondere geeignet zum Schutz und/oder zum Abdichten von Bauwerken oder Teilen davon, insbesondere für Balkone, Terrassen, Dächer, insbesondere Flachdächer oder schwach geneigte Dachfläche oder Dachgärten, oder im Innern von Gebäuden unter Fliesen oder Keramikplatten in Nasszellen oder Küchen.

Als Beschichtung kann sie beispielsweise flächig bis zur erwünschten Schichtdicke verteilt werden, beispielsweise mittels einer Rolle, einem Schieber, einer Zahntraufel oder einer Spachtel. Dabei wird typischerweise eine Schichtdicke im Bereich von 0.5 bis 3 mm, insbesondere 1.0 bis 2.5 mm, erhalten.

Geeignete Substrate, welche mit der Polyharnstoff-Zusammensetzung beschichtet werden können, sind insbesondere
- Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Applikation und Aushärtung der Polyharnstoff-Zusammensetzung bzw. aus dem Verfahren zum Beschichten oder Abdichten wird ein Artikel erhalten, welcher mit der Zusammensetzung abgedichtet oder beschichtet ist. Dieser Artikel kann ein Bauwerk oder ein Teil davon sein, insbesondere ein Bauwerk des Hoch- oder Tiefbaus, ein Balkon oder ein Treppenhaus.

Ein weiterer Gegenstand der Erfindung ist somit ein Artikel, erhalten aus dem beschriebenen Verfahren Verfahren zum Beschichten oder Abdichten.

Die Polyharnstoff-Zusammensetzung weist vorteilhafte Eigenschaften auf. Sie ist aufgrund des geringen Gehalts an monomeren Diisocyanaten auch ohne besondere Schutzvorkehrungen sicher in der Handhabung und benötigt in Bezug auf die monomerem Diisocyanate keine Gefahrenkennzeichnung, ist sehr gut applizierbar und verfügt über eine lange Verarbeitungszeit (Offenzeit) bei überraschend schneller Aushärtung. Dabei entsteht ein elastisches Material von überraschend hoher Zugfestigkeit bei hoher Dehnbarkeit, guten Haftungseigenschaften und hoher Stabilität gegenüber Hitze und Feuchtigkeit.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
Die verwendeten Chemikalien waren, sofern nicht anders bezeichnet, von Sigma-Aldrich.

### Herstellung von Isocyanatgruppen-haltigen Polymeren:

Die **Viskosität** wurde mit einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Polymer P1:

613.0 g Polyoxypropylendiol (OH-Zahl 56 mg KOH/g, Voranol® 2000 L, von Dow) und 387.0 g 4,4'-Diphenylmethandiisocyanat (Desmodur® 44 MC L, von Covestro) wurden nach bekanntem Verfahren bei 80 °C zu einem Polymer mit einem NCO-Gehalt von 10.5 Gewichts-%, einer Viskosität von 4 Pa·s bei 20 °C und einem Gehalt an monomerem 4,4'-Diphenylmethandiisocyanat von ca. 24 Gewichts-% umgesetzt.
Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180 °C, Druck 0.1 bis 0.005 mbar, Kondensationstemperatur 47°C). Das so erhaltene Polymer wies einen NCO-Gehalt von 3.0 Gewichts-%, eine Viskosität von 21 Pa·s bei 20 °C und einen Gehalt an monomerem 4,4'-Diphenylmethandiisocyanat von 0.05 Gewichts-% auf.

### Polymer P2:

500.0 g Polyoxypropylendiol (OH-Zahl 56 mg KOH/g, Voranol® 2000 L, von Dow) und 131.0 g 4,4'-Diphenylmethandiisocyanat (Desmodur® 44 MC L, von Covestro) wurden nach bekanntem Verfahren bei 80 °C zu einem Polymer mit einem NCO-Gehalt von 3.5 Gewichts-% und einem Gehalt an monomerem 4,4'-Diphenylmethandiisocyanat von ca. 2 Gewichts-% umgesetzt.

### Polyharnstoff-Zusammensetzungen:

### Zusammensetzungen Z1 bis Z10:

Für jede Zusammensetzung wurden die in den Tabellen 1 und 2 angegebenen Inhaltsstoffe in den angegebenen Mengen (in Gewichtsprozent) mittels eines Zentrifugalmischers (SpeedMixer™ DAC 150.1VZ, FlackTek Inc.) unter Feuchtigkeitsausschluss während 30 Sekunden bei 2500 rpm vermischt und unter Feuchtigkeitsausschluss aufbewahrt. Jede Zusammensetzung wurde folgendermassen geprüft:

**Verwendete Polyisocyanate:**

| |
|---|
| Desmodur E 2863 XP, Mischung aus HDI-Prepolymer mit HDI-Homopolymer, mittlere NCO-Funktionalität von 2.2, NCO-Gehalt von 11 Gewichts-%, Monomergehalt von < 0.3 %, Viskosität bei 23 °C ca. 1,350 mPa·s. |
| Desmodur 2860 XP, HDI-Allophanat, mittlere NCO-Funktionalität von 2.5, NCO-Gehalt von 20 Gewichts-%, Monomergehalt von < 0.16 %, Viskosität bei 23 °C ca. 500 mPa·s. |
| Desmodur N 3900, HDI-Homopolymer, mittleren NCO-Funktionalität von 3.5, NCO-Gehalt von 23.5 Gewichts-%, Monomergehalt von < 0.25 %, Viskosität bei 23 °C 730 ± 100 mPa·s. |

Die Viskosität der Zusammensetzungen wurde unter Verwendung eines Brookfield HBDV-II+ -Viskosimeters unter Verwendung der Spindel 7 und einer Geschwindigkeit von 100 U / min bei 23°C und 50% relativer Luftfeuchtigkeit gemessen.
Die Viskosität wurde periodisch in Intervallen von 2 Minuten gemessen, um den Gelpunkt und den Aufbau der Viskosität mit der Zeit zu bestimmen. Die Anfangsviskosität wurde 2 Minuten nach Beginn des Mischens auf dem Speedimxer gemessen. Die Resultate sind ersichtlich in den Tabellen 1 und 2 als «Anfangsviskosität» gemessen nach 2 min sowie aufgetragen über die Zeit der Figur 1.

Als Mass für die Verarbeitungszeit (Offenzeit) wurde der Zeitpunkt des Verlustes der selbstnivellierenden Eigenschaften ("**VSE**") bestimmt. Dazu wurde der Verlust an selbstnivellierenden Eigenschaften über die Beurteilung der Oberfläche der Beschichtung auf das Vorhandensein von Krater- und / oder Bürstenspuren bestimmt. Jede Zusammensetzung wurde in Intervallen von 1 Minute in einer Dicke von 2 Millimetern aufgetragen und nach 2 Stunden wurde eine visuelle Beurteilung der Oberfläche der Beschichtung vorgenommen.

Als Mass für die Aushärtungsgeschwindigkeit wurde die **«Begehbarkeit» in Stunden** bei 23°C und 50% relativer Luftfeuchtigkeit bestimmt. Zu diesem Zweck wurde jede Zusammensetzung in einer Dicke von 2 Millimetern auf ein Aluminiumsubstrat aufgebracht. Auf die Beschichtung wurde 5 Sekunden lang eine Last von 100 kg auf eine Oberfläche von 10 cm² aufgebracht und in regelmäßigen Zeitintervallen von 1 Stunde wiederholt. Die **«Begehbarkeit»** wurde als die Zeit bestimmt, bei welcher kein Bruch oder Eindringen der aufgebrachten Last in die Oberfläche der Beschichtung auftrat.

Zur Bestimmung der mechanischen Eigenschaften wurde ein Lloyds Instruments LR5k-Tensometers verwendet. Bestimmt wurden für die Tabelle 1:
1) Zugfestigkeit "**ZF**" (N/mm²),
2) Bruchdehnung "**BD**" (%),
3) Elastizitätsmodul "**E-mod**" (N/mm²)

In der Tabelle 2 wurde die die mechanischen Eigenschaften nach Hitzealterung "4w 80°C", respektive die Hydrolysebeständigkeit "4w 70/W", getestet und mit den unbehandelten, für 2 Tage bei 23°C und 50% relativer Luftfeuchtigkeit gelagerten Proben "2d NK" verglichen:

### Beständigkeit gegen Hitzealterung bei 80°C ("4w 80°C"):

Ein Film jeder Zusammensetzung wurde in einem Inkubator bei 80°C für einen Zeitraum von 4 Wochen gelagert.
Beim Entfernen aus dem Inkubator wurde jeder Film 24 Stunden lang bei 23 ° C / 50% relativer Luftfeuchtigkeit konditioniert, bevor die Bestimmung der mechanischen Eigenschaften durchgeführt wurde.

### Hydrolysebeständigkeit bei 70°C ("4w 70/W"):

Ein Film jeder Zusammensetzung wurde in Wasser getaucht und im Wasser in einem Inkubator bei 70°C für einen Zeitraum von 4 Wochen gelagert.
Beim Entfernen aus dem Inkubator wurden die Filme dann 24 Stunden bei einer erhöhten Temperatur von 60°C gelagert, um die Feuchtigkeit zu entfernen. Anschließend wurden weitere 24 Stunden bei 23 ° C / 50% relativer Luftfeuchtigkeit konditioniert, bevor die Bestimmung der mechanischen Eigenschaften durchgeführt wurde.

Die Resultate sind in den Tabellen 1 und 2 angegeben.
Die Zusammensetzungen **Z3-Z8** sind erfindungsgemässe Beispiele. Die Zusammensetzungen **Z1, Z2, Z9** und **Z10** sind Vergleichsbeispiele und versehen mit dem Zusatz "(**Ref.**)".

Aus Tabelle 1 ist ersichtlich, dass Zusammensetzungen gemäss dem Stand der Technik (Z2) über eine zu geringe Verarbeitbarkeit aufweisen und über ungenügende mechanische Eigenschaften, insbesondere E-modul und Zugfestigkeit, verfügen. Zusammensetzungen basierend auf P1 alleine (Z1) verfügen zwar über eine lange Verarbeitbarkeit, haben jedoch eine tiefe Aushärtungsgeschwindigkeit und verfügen auch über ungenügende mechanische Eigenschaften, insbesondere E-modul und Zugfestigkeit.

Weiter ist in Tabelle 2 ersichtlich, dass die Zugabe von HDI bei dem Prepolymer P2 gegenüber P1 zu einem tieferen E-modul führt und zu einer geringeren Bruchdehnung bei 2d NK, respektive 4w 70/W. Auch zeigt die Figur 1 eine gegenüber Z4 stark verkürzte Offenzeit (Viskositätsanstieg).

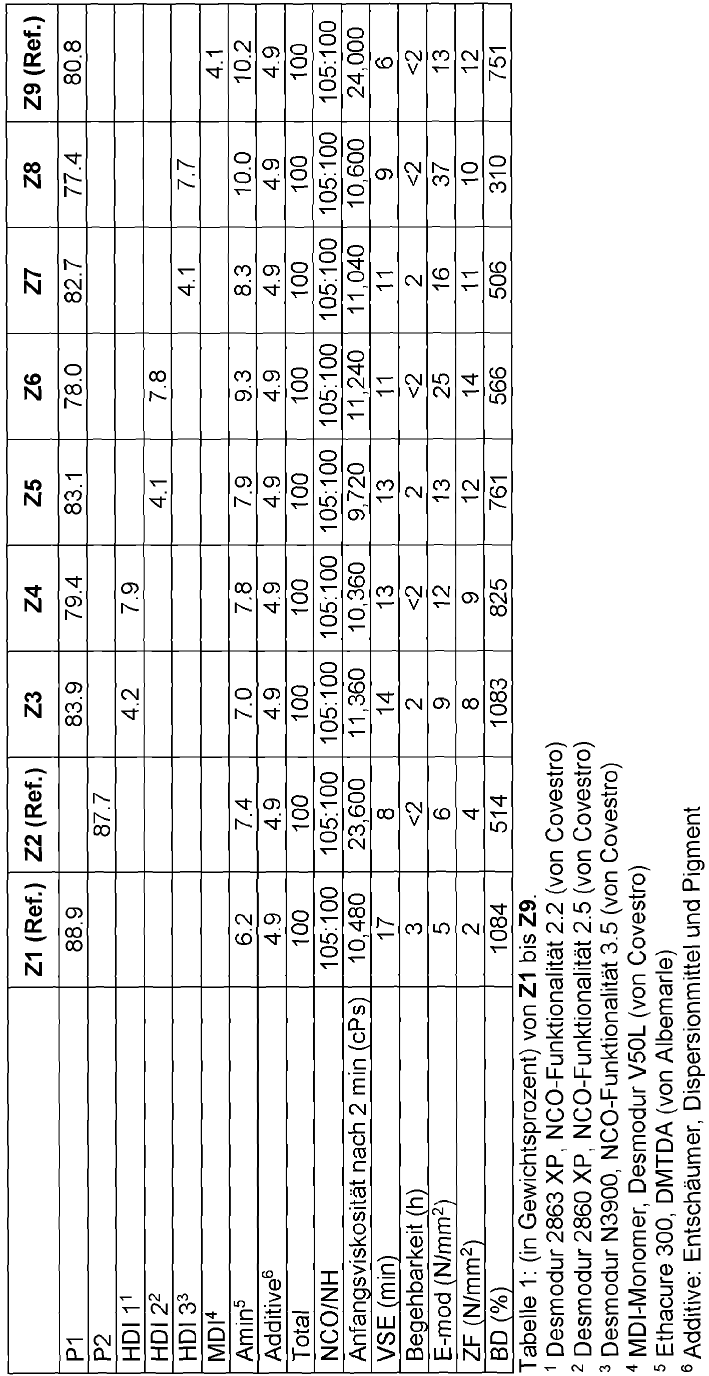

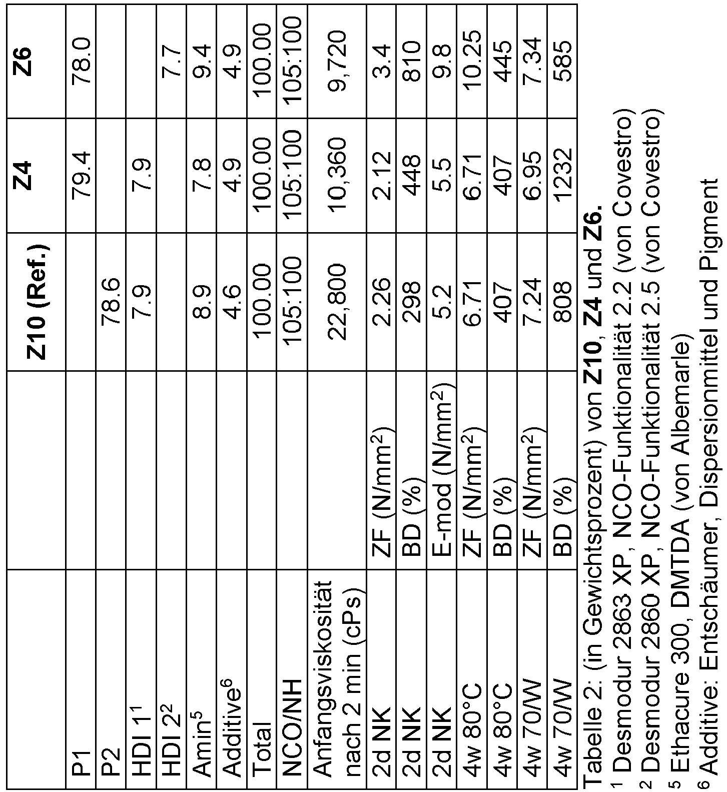

## Patentansprüche

1. Polyharnstoff-Zusammensetzung mit einem Gehalt an monomeren Diisocyanaten von höchstens 0.5 Gewichts-% umfassend eine erste Komponente **A** enthaltend:
- mindestens ein primäres, aromatisches Diamin **A1** ausgewählt aus der Liste bestehend aus Diethyltoluoldiamin, insbesondere 3,5-diethyltoluol-2,4-diamin und 3,5-diethyltoluol-2,6-diamin, 4,4'-Methylenbis-(2,6-diethyl)-anilin, 4,4'-Methylenbis-(2,6-diisopropyl)-anilin, 4,4'-Methylenbis-(3-chloro, 2,6-diethyl)-anilin und Dimethylthiotoluoldiamin, insbesondere 3, 5-dimethylthio-2, 6-toluoldiamin und 3, 5-dimethylthio-2, 4-toluoldiamin;
und eine zweite Komponente **B** enthaltend:
- mindestens ein Isocyanatgruppen-haltiges Polyetherurethan-Polymer **B1** mit einem Gehalt an monomeren Diisocyanaten von höchstens 0.5 Gewichts-% erhalten aus der Umsetzung von einem monomeren Diisocyanat, wobei es sich um 4,4'-Diphenylmethandiisocyanat, gegebenenfalls mit Anteilen von 2,4'- und/oder 2,2'-Diphenylmethandiisocyanat handelt, mit mindestens einem Polyetherpolyol in einem NCO/OH-Verhältnis von mindestens 3/1 und nachfolgender Entfernung eines Grossteils der monomeren Diisocyanate mittels eines geeigneten Trennverfahrens und
- mindestens ein aliphatisches Polyisocyanat **B2** mit einem NCO-Gehalt von 8 bis 25 Gewichts-%;
wobei das Gewichtsverhältnis **B1/B2** im Bereich von 5 - 50, insbesondere 7.5 - 30, vorzugsweise 8 - 25, liegt.

2. Polyharnstoff-Zusammensetzung gemäss Anspruch 1, **dadurch gekennzeichnet, dass** das Isocyanatgruppen-haltige Polyetherurethan-Polymer **B1** einen NCO-Gehalt im Bereich von 1 bis 8.4 Gewichts-%, besonders bevorzugt 1.4 bis 5.6 Gewichts-%, insbesondere 2 bis 4.2 Gewichts-%, hat.

3. Polyharnstoff-Zusammensetzung gemäss einem der vorgehenden Ansprüche, **dadurch gekennzeichnet, dass** das Polyetherpolyol eine OH-Zahl im Bereich von 20 bis 280 mg KOH/g, bevorzugt im Bereich von 35 bis 120 mg KOH/g, besonders bevorzugt im Bereich von 50 bis 60 mg KOH/g, aufweist.

4. Polyharnstoff-Zusammensetzung gemäss einem der vorgehenden Ansprüche, **dadurch gekennzeichnet, dass** das Polyetherpolyol eine mittlere OH-Funktionalität im Bereich von 1.7 bis 3, insbesondere im Bereich von 1.8 bis 2, aufweist.

5. Polyharnstoff-Zusammensetzung gemäss einem der vorgehenden Ansprüche, **dadurch gekennzeichnet, dass** das für die Umsetzung verwendete monomere Diisocyanat 4,4'-Diphenylmethandiisocyanat ist.

6. Polyharnstoff-Zusammensetzung gemäss einem der vorgehenden Ansprüche, **dadurch gekennzeichnet, dass** das NCO/OH-Verhältnis bei der Umsetzung zwischen dem monomeren Diisocyanat mit dem Polyetherpolyol im Bereich von 3/1 bis 10/1, insbesondere im Bereich von 4/1 bis 7/1, liegt.

7. Polyharnstoff-Zusammensetzung gemäss einem der vorgehenden Ansprüche, **dadurch gekennzeichnet, dass** es sich bei dem mindestens einen primären, aromatischen Diamin **A1** um Dimethylthiotoluoldiamin handelt, am meisten bevorzugt um 3, 5-dimethylthio-2, 6-toluoldiamin und 3, 5-dimethylthio-2, 4-toluoldiamin.

8. Polyharnstoff-Zusammensetzung gemäss einem der vorgehenden Ansprüche, **dadurch gekennzeichnet, dass** es sich bei dem aliphatischen Polyisocyanat **B2** um ein Oligomer, Polymer und/oder Derivat abgeleitet von 1,6-Hexamethylendiisocyanat oder Isophorondiisocyanat, insbesondere 1,6-Hexamethylendiisocyanat, handelt.

9. Polyharnstoff-Zusammensetzung gemäss einem der vorgehenden Ansprüche, **dadurch gekennzeichnet, dass** das aliphatische Polyisocyanat **B2** eine mittlere NCO-Funktionalität von mindestens 2.1, vorzugsweise 2.1 bis 3.0, insbesondere 2.1 bis 2.6, aufweist.

10. Polyharnstoff-Zusammensetzung gemäss einem der vorgehenden Ansprüche, **dadurch gekennzeichnet, dass** sie weniger als 5 Gew.-%, weniger als 2 Gew.-%, weniger als 1 Gew.-%, weniger als 0.5 Gew.-%, insbesondere weniger als 0.1 Gew-% Lösungsmittel enthält, bezogen auf das Gesamtgewicht der Polyharnstoff-Zusammensetzung.

11. Polyharnstoff-Zusammensetzung gemäss einem der vorgehenden Ansprüche, **dadurch gekennzeichnet, dass** das Verhältnis der Isocyanatgruppen gegenüber den zu Isocyanatgruppen reaktiven Gruppen, insbesondere Aminogruppen, im Bereich von 1 bis 1.2, bevorzugt im Bereich von 1 bis 1.1, liegt.

12. Polyharnstoff-Zusammensetzung gemäss einem der vorgehenden Ansprüche, **dadurch gekennzeichnet, dass** sie:
- 3 bis 15 Gewichts-%, 5 bis 12 Gewichts-%, insbesondere 7 bis 10 Gewichts-%, primäres, aromatisches Diamin **A1** ausgewählt aus der Liste bestehend aus Diethyltoluoldiamin, insbesondere 3,5-diethyltoluol-2,4-diamin und 3,5-diethyltoluol-2,6-diamin, 4,4'-Methylenbis-(2,6-diethyl)-anilin, 4,4'-Methylenbis-(2,6-diisopropyl)-anilin, 4,4'-Methylenbis-(3-chloro, 2,6-diethyl)-anilin und Dimethylthiotoluoldiamin, insbesondere 3, 5-dimethylthio-2, 6-toluoldiamin und 3, 5-dimethylthio-2, 4-toluoldiamin,
- 55 bis 90 Gewichts-%, 60 bis 90 Gewichts-%, 70 bis 85 Gewichts-%, insbesondere 75 bis 85 Gewichts-% Isocyanatgruppen-haltiges Polyetherurethan-Polymer **B1** mit einem Gehalt an monomeren Diisocyanaten von höchstens 0.5 Gewichts-%,
- 2 bis 15 Gewichts-%, 3 bis 10 Gewichts-%, insbesondere 4 bis 8 Gewichts-%, aliphatisches Polyisocyanat **B2** mit einem NCO-Gehalt von 8 bis 25 Gewichts-%,
- 5 - 30 Gew.-%, insbesondere 10 - 25 Gew.-%, besonders bevorzugt 10 - 20 Gew.-%, Füllstoffe,
- vorzugsweise 2-10 Gew.-%, insbesondere 3 - 8 Gew.-%, besonders bevorzugt 3 - 5 Gew.-%, von anorganischen oder organischen Pigmenten, flammhemmenden Substanzen und Additiven, enthält.

13. Verfahren zum Beschichten oder Abdichten, umfassend die Schritte
(i) Vermischen der Komponenten der Polyharnstoff-Zusammensetzung gemäss einem der Ansprüche 1 bis 12,
(ii) Applizieren der vermischten Polyharnstoff-Zusammensetzung auf mindestens ein Substrat,
(iii) Aushärten der Zusammensetzung.

14. Artikel, erhalten aus dem Verfahren gemäss Anspruch 13.
